# EUROPEAN PATENT APPLICATION

(11) **EP 3 991 904 A1**
(43) Date of publication of application: **04.05.2022**
(21) Application number: 20832760.1
(22) Date of filing: 28.05.2020
(51) Int. Cl.: B23K 26/00, B23K 26/38

(54) **LASER PROCESSING MACHINE SETTING METHOD AND LASER PROCESSING MACHINE**

(30) Priority: 26.06.2019 JP 2019118341
(71) Applicant: Amada Co., Ltd., Isehara-shi, Kanagawa 259-1196 (JP)
(72) Inventor: ASAMI, Junichi, Isehara-shi, Kanagawa 259-1196 (JP); IWATA, Kazuhiro, Isehara-shi, Kanagawa 259-1196 (JP)
(74) Representative: Grünecker Patent- und Rechtsanwälte PartG mbB
(86) International application number: PCT/JP2020/021031
(87) International publication number: WO 2020/261862

(57) **Abstract**

A reflected beam detection value obtained by detecting a reflected beam of a visible beam generated on a sheet metal (W) or a scattered beam detection value obtained by detecting a scattered beam from an optical component is stored in a storage unit, the reflected beam or the scattered beam being detected at a time when the sheet metal (W) is cut by irradiating the sheet metal with a laser beam under a predetermined processing condition. The reflected beam detection value or the scattered beam detection value stored in the storage unit is registered as a reference value associated with the predetermined processing condition.

## Description

### Technical Field

The present disclosure relates to a laser processing machine setting method and a laser processing machine.

### Background Art

Laser processing machines that fabricate a product having a predetermined shape by cutting a sheet metal with a laser beam emitted from a laser oscillator are widely used.

To appropriately process a sheet metal with a laser processing machine, processing conditions have to be set according to material conditions of the sheet metal, such as a material and a thickness (see Patent Literatures 1 to 3). The processing conditions include an output of a laser beam that is emitted from a laser oscillator, a duty of the laser beam, a focus position, the type of a nozzle, the type and flow rate of assist gas, and the like.

### Citation List

### Patent Literature

Patent Literature 1: Japanese Patent Application Laid-Open Publication No. 5-309485
Patent Literature 2: Japanese Patent Application Laid-Open Publication No. 2001-138082
Patent Literature 3: Japanese Patent Application Laid-Open Publication No. 2017-164801

### Summary

A manufacturer that manufactures and sells a laser processing machine determines optimum processing conditions matching various material conditions, and causes a control device for controlling the laser processing machine to retain the processing conditions. A user operates the control device and selects processing conditions according to the material conditions of a sheet metal that is to be processed, and the laser processing machine processes the sheet metal under the selected processing conditions.

Numerous steps are involved when a manufacturer evaluates processing results obtained under a plurality of processing conditions and determines optimum processing conditions. In a case where a new processing function is provided in the laser processing machine, processing conditions for a case of using the new processing function have to be determined. It takes a certain amount of time for the manufacturer to determine the optimum processing conditions and to cause the same to be retained in the control device.

Even when a user selects processing conditions according to the material conditions of the sheet metal, a processing defect may occur. This is due to a difference in components or in a ratio of components contained in a sheet metal manufactured in Japan and a sheet metal manufactured outside Japan, or variations in thickness of sheet metals manufactured outside Japan. If optimum processing conditions according to material conditions are determined and retained in the control device, occurrence of a processing defect may be swiftly eliminated.

One or more embodiments are aimed at providing a laser processing machine setting method and a laser processing machine allowing setting of optimum processing conditions according to material conditions.

According to a first aspect of one or more embodiments, there is provided a laser processing machine setting method including: storing, in a storage unit, a reflected beam detection value obtained by detecting a reflected beam of a visible beam generated on a sheet metal or a scattered beam detection value obtained by detecting a scattered beam from an optical component, the reflected beam or the scattered beam being detected at a time when the sheet metal is cut by irradiating the sheet metal with a laser beam under a predetermined processing condition; and registering the reflected beam detection value or the scattered beam detection value stored in the storage unit, as a reference value associated with the predetermined processing conditions.

According to a second aspect of one or more embodiments, there is provided a laser processing machine including: a registration unit configured to register, as a reference value, a reflected beam detection value obtained by detecting a reflected beam of a visible beam generated on the sheet metal or a scattered beam detection value obtained by detecting a scattered beam from an optical component, the reflected beam or the scattered beam being detected at a time when the sheet metal is cut by irradiating the sheet metal with a laser beam under a predetermined processing condition; and a determination unit configured to determine whether there is occurrence of a processing defect or not based on a result of comparison between the reference value and the reflected beam detection value or the scattered beam detection value that is obtained at a time when the sheet metal is cut under the predetermined material conditions.

With the laser processing machine setting method and the laser processing machine according to one or more embodiments, optimum processing conditions according to material conditions may be set.

### Brief Description of Drawings

[Figure 1]

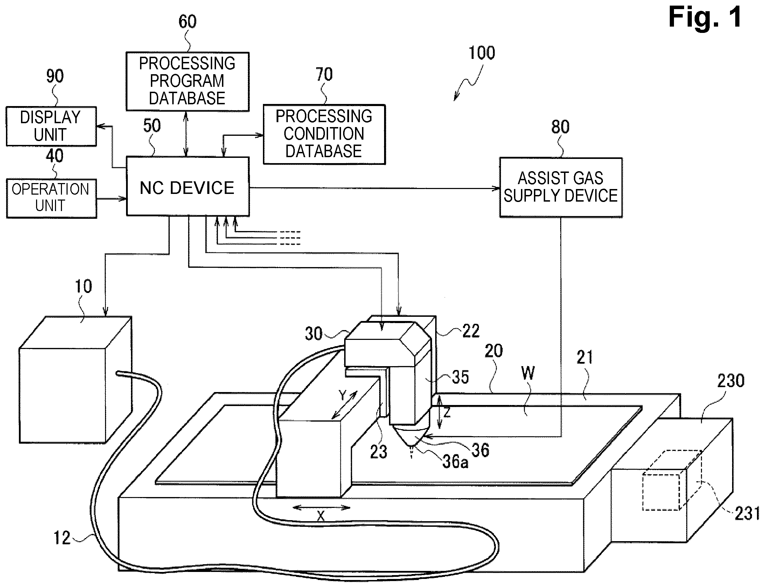

   Figure 1 is a diagram showing an example overall configuration of a laser processing machine of one or more embodiments.
[Figure 2]

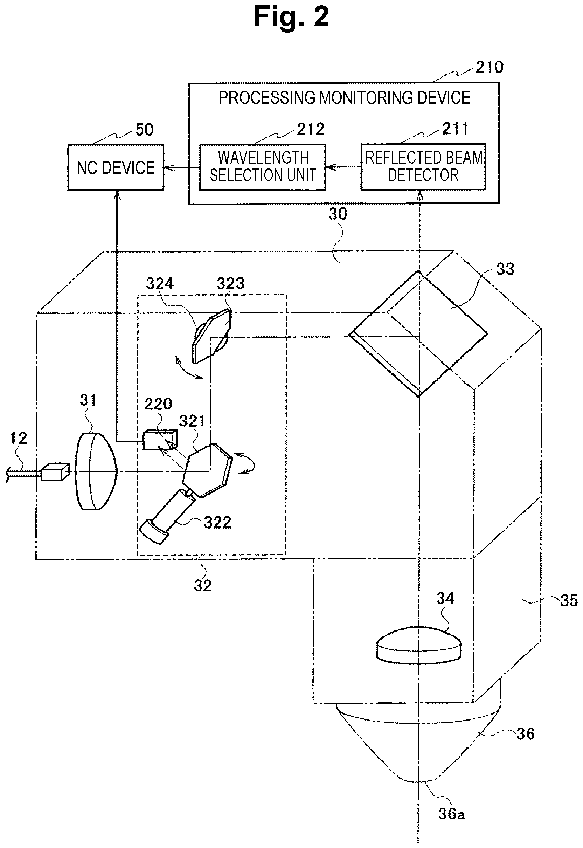

   Figure 2 is a diagram showing a processing monitoring device and a scattered beam detector provided in the laser processing machine of one or more embodiments.
[Figure 3A]

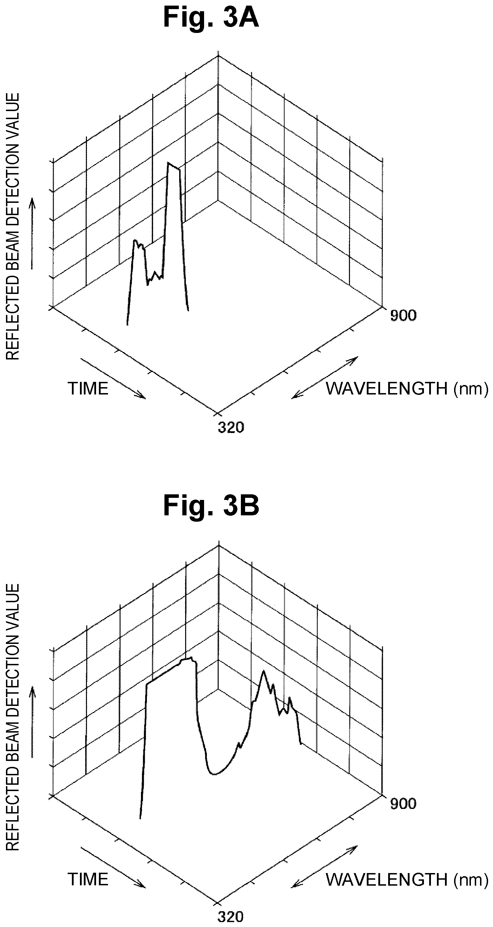

   Figure 3A is a characteristics diagram showing a reflected beam detection value in a state where there is no occurrence of processing defect.
[Figure 3B]
   Figure 3B is a characteristics diagram showing the reflected beam detection value in a state where there is occurrence of processing defect.
[Figure 4]

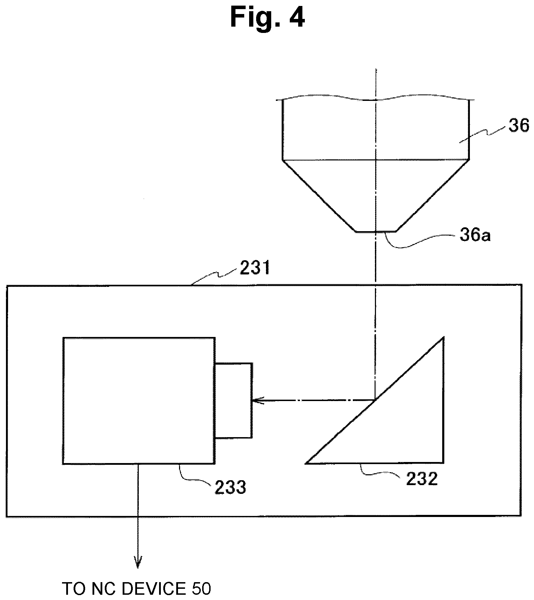

   Figure 4 is a diagram showing a nozzle monitoring device provided in a nozzle changer provided in the laser processing machine of one or more embodiments.
[Figure 5]

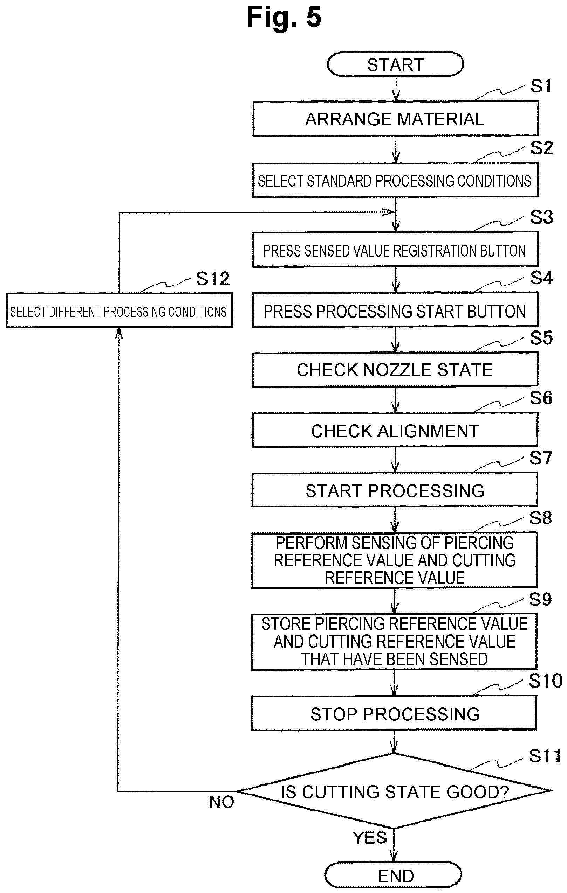

   Figure 5 is a flowchart showing a laser processing machine setting method of one or more embodiments, and showing a process performed by an operator or the laser processing machine when the laser processing machine performs test-processing on a sheet metal.
[Figure 6]

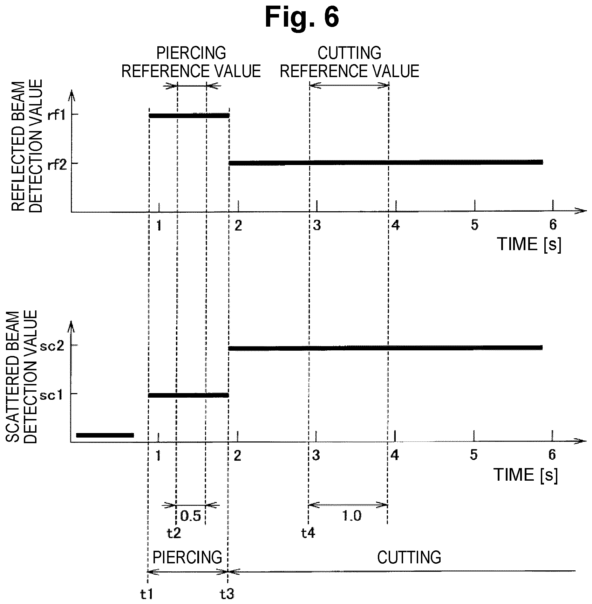

   Figure 6 is a diagram showing the reflected beam detection value generated by the processing monitoring device and a scattered beam detection value generated by the scattered beam detector.
[Figure 7]

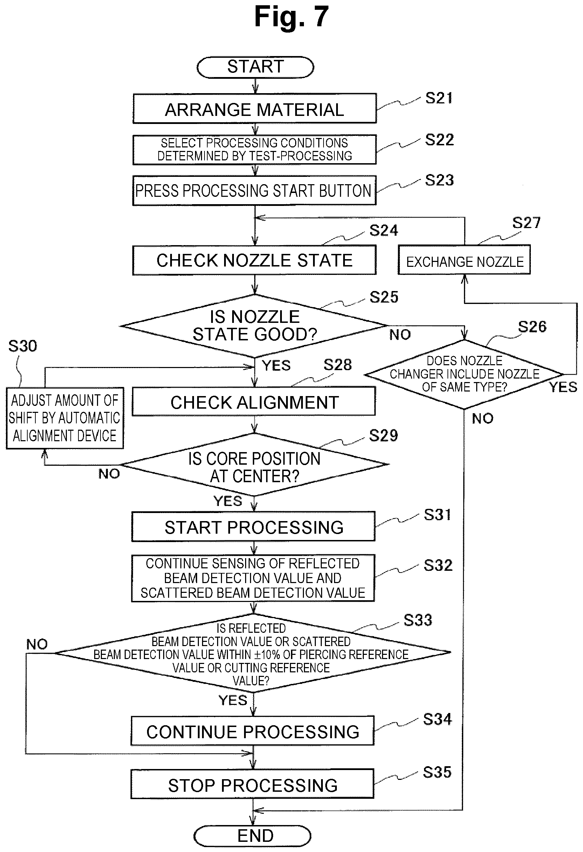

   Figure 7 is a flowchart showing a process performed by the operator or the laser processing machine when the laser processing machine of one or more embodiments performs actual processing on the sheet metal.

### Description of Embodiment

Hereinafter, a laser processing machine setting method and a laser processing machine of one or more embodiments will be described with reference to the appended drawings. In Figure 1, a laser processing machine 100 includes a laser oscillator 10 for generating and emitting a laser beam, a laser processing unit 20, and a process fiber 12 for transmitting the laser beam emitted from the laser oscillator 10 to the laser processing unit 20.

Furthermore, the laser processing machine 100 includes an operation unit 40, an NC device 50, a processing program database 60, a processing condition database 70, an assist gas supply device 80, and a display unit 90. The NC device 50 is an example of a control device for controlling each unit of the laser processing machine 100.

As the laser oscillator 10, a laser oscillator that emits a laser beam at a predetermined wavelength by amplifying an excitation beam emitted from a laser diode, or a laser oscillator that directly uses a laser beam that is emitted from a laser diode is suitably used. For example, the laser oscillator 10 is a solid laser oscillator, a fiber laser oscillator, a disk laser oscillator, or a direct diode laser oscillator (a DDL oscillator).

The laser oscillator 10 emits a 1-µm band laser beam at a wavelength of 900 nm to 1100 nm. When taking the fiber laser oscillator and the DDL oscillator as examples, the fiber laser oscillator emits a laser beam at a wavelength of 1060 nm to 1080 nm, and the DDL oscillator emits a laser beam at a wavelength of 910 nm to 950 nm.

The laser processing unit 20 includes a processing table 21 on which a sheet metal W as a processing target is mounted, a gate-type X-axis carriage 22, a Y-axis carriage 23, a collimator unit 30 fixed to the Y-axis carriage 23, and a processing head 35. The X-axis carriage 22 is configured to be freely movable on the processing table 21 in an X-axis direction. The Y-axis carriage 23 is configured to be freely movable on the X-axis carriage 22 in a Y-axis direction perpendicular to an X-axis. The X-axis carriage 22 and the Y-axis carriage 23 function as a moving mechanism for moving the processing head 35 along a surface of the sheet metal W, in the X-axis direction, the Y-axis direction, or any combined direction of the X-axis and the Y-axis.

Instead of causing the processing head 35 to move along the surface of the sheet metal W, the processing head 35 may be configured to be fixed in place so that the sheet metal W moves. It suffices if the laser processing machine 100 includes a moving mechanism for moving the processing head 35 relative to the surface of the sheet metal W.

A nozzle 36 including a circular opening 36a at a tip end portion is attached to the processing head 35, the nozzle 36 being for emitting a laser beam from the opening 36a. The sheet metal W is irradiated with the laser beam that is emitted from the opening 36a of the nozzle 36. The assist gas supply device 80 supplies to the processing head 35, as assist gas, nitrogen, oxygen, mixed gas of nitrogen and oxygen, or air. The assist gas is blown onto the sheet metal W from the opening 36a at the time of processing of the sheet metal W. The assist gas ejects molten metal in a kerf width where the sheet metal W is melted.

A nozzle changer 230 for exchanging the nozzle 36 is provided next to the processing table 21. The nozzle changer 230 includes a nozzle monitoring device 231 described later.

As shown in Figure 2, the collimator unit 30 includes a collimation lens 31 for converting a laser beam that is a divergent beam emitted from the process fiber 12 into a parallel beam (a collimated beam). The collimator unit 30 also includes a galvano scanner unit 32, and a bend mirror 33 for reflecting a laser beam emitted from the galvano scanner unit 32 downward in a Z-axis direction perpendicular to the X-axis and the Y-axis. The processing head 35 includes a focusing lens 34 for focusing a laser beam reflected by the bend mirror 33, and irradiating the sheet metal W with the focused laser beam.

To adjust a focus position of the laser beam, the focusing lens 34 is configured to be freely movable in a direction of approaching the sheet metal W and in a direction of moving away from the sheet metal W, the focusing lens 34 being moved by a drive and a moving mechanism not shown.

The laser processing machine 100 is aligned such that the laser beam that is emitted from the opening 36a of the nozzle 36 is positioned at a center of the opening 36a. In a standard state, the laser beam is emitted from the center of the opening 36a. The galvano scanner unit 32 functions as a beam vibration mechanism for causing the laser beam traveling in the processing head 35 to be emitted from the opening 36a to vibrate inside the opening 36a.

The galvano scanner unit 32 includes a scanning mirror 321 for reflecting the laser beam output from the collimation lens 31, and a drive unit 322 for rotating the scanning mirror 321 to a predetermined angle. The galvano scanner unit 32 also includes a scanning mirror 323 for reflecting the laser beam emitted from the scanning mirror 321, and a drive unit 324 for rotating the scanning mirror 323 to a predetermined angle.

The drive unit 322 and 324 are capable of causing the scanning mirrors 321 and 323 to reciprocally vibrate in predetermined angle ranges based on the control by the NC device 50. The galvano scanner unit 32 causes the laser beam with which the sheet metal W is irradiated to vibrate, by causing one or both of the scanning mirror 321 and the scanning mirror 323 to reciprocally vibrate.

The galvano scanner unit 32 is capable of causing the laser beam to vibrate in a direction parallel to a cutting traveling direction on the sheet metal W. A vibration pattern of vibration of the laser beam parallel to the cutting traveling direction will be referred to as a parallel vibration pattern. The galvano scanner unit 32 is capable of causing the laser beam to vibrate in a direction orthogonal to the cutting traveling direction. A vibration pattern of vibration of the laser beam orthogonal to the cutting traveling direction will be referred to as an orthogonal vibration pattern.

The galvano scanner unit 32 is capable of causing the laser beam to vibrate along a predetermined shape such as a circular shape, a C-shape or an 8-shape. Vibration patterns of vibration of the laser beam along the predetermined shapes such as the circular shape, the C-shape and the 8-shape will be referred to as a circular vibration pattern, a C-shaped vibration pattern, and an 8-shaped vibration pattern. The C-shaped vibration pattern is desirably a pattern of drawing a C-shape that protrudes on a forward side in the cutting traveling direction. The 8-shaped vibration pattern may be selected between a pattern of drawing an 8-shape along the cutting traveling direction and a pattern of drawing the 8-shape in a direction orthogonal to the cutting traveling direction.

These vibration patterns indicate manners of vibration caused by displacement of the laser beam by the galvano scanner unit 32 in a state where the processing head 35 is not moved in the cutting traveling direction. In reality, the laser beam is vibrated while the processing head 35 is moving in the cutting traveling direction, and thus, a vibration pattern is a vibration pattern in which displacement in the cutting traveling direction is added to the vibration pattern by the galvano scanner unit 32. When taking the orthogonal vibration pattern as an example, the laser beam is vibrated in an orthogonal direction while moving in the cutting traveling direction, and thus, the actual orthogonal vibration pattern is a vibration pattern that draws a sine wave.

An output of a laser beam that is emitted from the laser oscillator 10, a duty of the laser beam, the focus position, the type of the nozzle 36, the type and flow rate of the assist gas, and the like are set in each of processing conditions in a processing condition file stored in the processing condition database 70. Furthermore, whether to vibrate the laser beam or not is set in each of processing conditions, and in the case of vibration, which of the vibration patterns is to be used is set. In the case where one of the vibration patterns is set in the processing conditions, the NC device 50 controls the galvano scanner unit 32 in such a way that the laser beam is vibrated in the vibration pattern that is set.

As shown in Figure 2, a processing monitoring device 210 for monitoring a processing state of the sheet metal W by the laser processing machine 100 and for determining quality of the processing state is provided above the collimator unit 30. The processing monitoring device 210 is omitted from Figure 1.

The processing monitoring device 210 includes a reflected beam detector 211 and a wavelength selection unit 212. The reflected beam detector 211 detects a reflected beam of a visible beam, indicated by a dashed line, occurring at a processing point on the sheet metal W and transmitted through the bend mirror 33. The reflected beam detector 211 generates an analog detection value according to a beam amount of entering reflected beam, generates a reflected beam detection value that is a digital value obtained by performing A/D conversion on the analog detection value, and supplies the same to the wavelength selection unit 212. In the case where the reflected beam detector 211 is to output the analog detection value, an A/D converter may be provided subsequent to the reflected beam detector 211.

The wavelength selection unit 212 selects a reflected beam detection value for a certain wavelength from reflected beam detection values in a predetermined wavelength band input from the reflected beam detector 211, and supplies the same to the NC device 50.

As described above, the wavelength of the laser beam with which the sheet metal W is irradiated is in a 1 µm band. The laser processing machine 100 includes a function of irradiating the sheet metal W with a red guide beam so that the position of the laser beam with which the sheet metal W is irradiated can be visually checked before the sheet metal W is processed. The bend mirror 33 transmits beams with wavelengths at or less than 900 nm and excluding wavelengths around the wavelength of the red guide beam. Specifically, in the case where the wavelength of the guide beam is 630 nm, the bend mirror 33 transmits beams in a wavelength band of 320 nm to 900 nm excluding 600 nm to 660 nm. Accordingly, the reflected beam detector 211 detects reflected beams in the wavelength band of 320 nm to 900 nm excluding 600 nm to 660 nm.

Figure 3A shows the reflected beam detection value at each wavelength detected by the reflected beam detector 211 at a time of desirable cutting when the sheet metal W is cut in a desirable manner. Figure 3B shows the reflected beam detection value at each wavelength detected by the reflected beam detector 211 at a time of poor cutting when the sheet metal W is not cut in a desirable manner. As is clear from comparing Figures 3A and 3B, the reflected beam of the visible beam is increased at the time of poor cutting, and the reflected beam detection value for each wavelength detected by the reflected beam detector 211 is increased. Accordingly, the reflected beam detection value for a selected wavelength output from the wavelength selection unit 212 is increased. The wavelength that is selected by the wavelength selection unit 212 may be 800 nm, or a wavelength selected from between 400 nm and 500 nm, for example.

As shown in Figure 2, a scattered beam detector 220 for detecting a scattered beam that is generated when the laser beam is reflected by the scanning mirror 321 is disposed inside the collimator unit 30. The scattered beam detector 220 generates an analog detection value according to a beam amount of entering scattered beam, generates a scattered beam detection value that is a digital value obtained by performing A/D conversion on the analog detection value, and supplies the same to the NC device 50. In the case where the scattered beam detector 220 is to output the analog detection value, an A/D converter may be provided subsequent to the scattered beam detector 220. The scattered beam detector 220 may also detect a scattered beam from any optical component other than the scanning mirror 321.

As shown in Figure 4, the nozzle monitoring device 231 includes a bend mirror 232 and a camera 233. When the processing head 35 moves to the nozzle changer 230 and the nozzle 36 is positioned above the nozzle monitoring device 231, the camera 233 is able to capture the nozzle 36. The camera 233 is able to capture the nozzle 36 in a state where the laser oscillator 10 is emitting a low-output laser beam for inspection and the low-output laser beam is being emitted from the opening 36a.

The NC device 50 may determine whether the state of the nozzle 36 is good or not by calculating circularity of an outer circumference of the nozzle 36 or the opening 36a based on a captured image obtained by the camera 233 capturing the nozzle 36. The NC device 50 may determine whether alignment is performed such that the laser beam is positioned at the center of the opening 36a, based on a captured image obtained by the camera 233 capturing the nozzle 36 emitting the laser beam from the opening 36a.

A process performed by an operator or the laser processing machine 100 when the laser processing machine 100 performs test-processing on the sheet metal W will be described with reference to Figure 5. In Figure 5, in step S1, to start test-processing of a sheet metal W having predetermined material conditions (material and thickness), an operator places the sheet metal W as the material on the processing table 21. The sheet metal W here is a material for test-processing. In step S2, the operator selects standard processing conditions by the operation unit 40, for example.

In step S3, the operator presses a sensed value registration button provided on the operation unit 40. The operation unit 40 may be provided with a button dedicated to sensed value registration, or a button for another purpose may be temporarily used as the sensed value registration button. Next, in step S4, the operator presses a processing start button provided on the operation unit 40.

The NC device 50 moves the processing head 35 to the nozzle changer 230, and in step S5, checks the state of the nozzle 36 based on a captured image obtained by the camera 233 of the nozzle monitoring device 231 capturing the nozzle 36. Specifically, as described above, the NC device 50 calculates and stores the circularity of the nozzle 36. Because a nozzle 36 having a substantially true circular shape is attached at the time of test-processing of the sheet metal W by the laser processing machine 100, the circularity stored in the NC device 50 is taken as a reference value for circularity.

In step S6, the NC device 50 checks alignment of the nozzle 36. Specifically, as described above, the NC device 50 controls the laser oscillator 10 such that a low-output laser beam for inspection is emitted, captures the nozzle 36 in a state where the laser beam is being emitted, and quantifies and stores an amount of shift from the center of the opening 36a. Because alignment is performed at a time of test-processing of the sheet metal W by the laser processing machine 100, the amount of shift stored in the NC device 50 is taken as a reference value for the amount of shift.

In step S7, the NC device 50 starts processing (test-processing) of the sheet metal W. At this time, the processing monitoring device 210 starts detection of the reflected beam, and the scattered beam detector 220 starts detection of the scattered beam.

Figure 6 shows how the reflected beam detection value from the processing monitoring device 210 and the scattered beam detection value from the scattered beam detector 220 that are input to the NC device 50 change from before processing of the sheet metal W to after processing. In Figure 6, a period from time t1 to time t3 indicates a period of piercing for opening a pierced hole in the sheet metal W, and a period after the time t3 is a period when the sheet metal W is cut. Cutting of the sheet metal W includes cutting of an approach path joined to the pierced hole, and cutting along an outer circumference of a product to be fabricated, the outer circumference joined to the approach path.

As shown in Figure 6, prior to the time t1 before processing of the sheet metal W, the reflected beam detection value is not input to the NC device 50, and in the piercing period, the reflected beam detection value takes a substantially constant value at level rf1. In the period during which the sheet metal W is cut, the reflected beam detection value is at level rf2 lower than the level rf1. Prior to the time t1 before processing of the sheet metal W, the scattered beam detection value is at an extremely low level that is close to zero. The scattered beam detection value takes a substantially constant value at level sc1 in the piercing period, and takes a substantially constant value at level sc2 higher than the level sc1 in the period during which the sheet metal W is cut.

In Figure 6, the reflected beam detection value and the scattered beam detection value are shown to be at constant values for the sake of simplicity. To be precise, the reflected beam detection value and the scattered beam detection value subtly fluctuate instead of taking completely constant values.

In step S8, the NC device 50 senses, with respect to the reflected beam detection value and the scattered beam detection value, piercing reference values in the piercing period and cutting reference values in the period during which the sheet metal W is cut, and in step S9, the NC device 50 stores the piercing reference values and the cutting reference values that have been sensed in the processing condition database 70. In step S10, the NC device 50 stops processing of the sheet metal W.

As shown in Figure 6, the NC device 50 stores the reflected beam detection value and the scattered beam detection value over 0.5 seconds from the time t1 when piercing is started to the time t2 0.5 seconds later, for example, as the piercing reference value in the reflected beam detection value and the piercing reference value in the scattered beam detection value, respectively. The NC device 50 stores the reflected beam detection value and the scattered beam detection value over 1.0 second from the time t3 when cutting of the sheet metal W is started to time t4 1.0 second later, for example, as the cutting reference value in the reflected beam detection value and the cutting reference value in the scattered beam detection value, respectively.

The NC device 50 may acquire and store the reflected beam detection value and the scattered beam detection value at a time point or in a time that is set in advance, and may store the same in the processing condition database 70 as reference values. In one or more embodiments, the time point or the time that is set in advance is a time point or a time during opening of the pierced hole in the sheet metal W, or a predetermined time point or a time after cutting of the sheet metal W is started after the pierced hole is opened in the sheet metal W. The processing condition database 70 is an example of a registration unit in which the reference value is registered. The NC device 50 may store the reference value in a storage unit other than the processing condition database 70, and may store the reference value in any storage unit.

In step S11, the operator determines whether a cutting state of the sheet metal W is good or not. In the case where the cutting state of the sheet metal W is good (YES), test-processing of the sheet metal W is ended. Then, the NC device 50 formally registers, in association with processing conditions, the stored reflected beam detection values and the stored scattered beam detection values in the processing condition database 70, as the piercing reference values and the cutting reference values. In the case where the cutting state of the sheet metal W is not good (NO), the operator selects different processing conditions in step S12, and repeats steps S3 to S11. In this case, the reflected beam detection values and the scattered beam detection values stored in the processing condition database 70 are erased, or are registered in the processing condition database 70 in association with the processing conditions, as reference values for poor cutting.

As can be seen from Figure 5, selection of different processing conditions, pressing of the sensed value registration button, storing of new piercing reference values and new cutting reference values in the reflected beam detection value and the scattered beam detection value are repeated until the operator determines that the cutting state of the sheet metal W is good. At the end, the piercing reference values and the cutting reference values in association with the processing conditions in which good cutting state is determined are registered in the processing condition database 70. This registration is performed by pressing a registration button by the operator.

Additionally, not only the piercing reference values and the cutting reference values in the reflected beam detection value and the scattered bema detection value are registered in association with the processing conditions, but also the thickness of the sheet metal W, material information, the reference value obtained by calculating the circularity of the nozzle 36, or the amount of shift of the laser beam from the center of the nozzle 36 may be registered in the processing condition database 70. Moreover, the piercing reference values and the cutting reference values may be stored at all times in the processing condition database 70 without pressing of the sensed value registration button before processing, and the operator may press the sensed value registration button as necessary after confirming good cutting state and may register the piercing reference values and the cutting reference values in association with the processing conditions.

The piercing reference values and cutting reference values, in the reflected beam detection value and the scattered beam detection value, that are stored by the last pressing of the sensed value registration button in the test-processing of the sheet metal W in Figure 5 are the reference values associated with the processing conditions under which the sheet metal W may be cut in a desirable cutting state. The final piercing reference values and cutting reference values by which the sheet metal W may be cut in a desirable cutting state are registered in the processing condition database 70, in association with the material conditions of the sheet metal W. The NC device 50 uses these final piercing reference values and cutting reference values as the reference values that are associated with the processing conditions under which the sheet metal W may be cut in a desirable cutting state.

As described below, quality of the nozzle 36 and quality of alignment of the nozzle 36 may be determined in the same manner as by the processes shown in Figure 5. When the sensed value registration button is pressed before processing of the sheet metal W, the NC device 50 calculates the circularity of the outer circumference of the nozzle 36 or of the opening 36a based on a captured image obtained by the camera 233 capturing the nozzle 36, and stores the calculated circularity in the processing condition database 70 as the reference value. The NC device 50 may alternatively store, in the processing condition database 70, a captured image obtained by the camera 233 capturing the nozzle 36 emitting a laser beam from the opening 36a (or the amount of shift of the laser beam from the center of the nozzle 36) as the reference value.

Then, when the processing start button is pressed and the sheet metal W is processed, and the operator determines that the cutting state of the sheet metal W is good and presses the sensed value registration button, the circularity of the nozzle 36 (the opening 36a) and the amount of shift of the laser beam from the center of the nozzle 36 are registered as the reference values, in association with the processing conditions.

The piercing reference values, the cutting reference values, the reference value for the circularity, and the reference value for the amount of shift may be registered in association with the processing conditions and nozzle identification information for identifying the nozzle 36. The nozzle identification information is any one of type, shape and opening diameter of the nozzle 36 or any combination thereof. In the case where one of processing conditions and one piece of nozzle identification information are associated with each other, each reference value may be registered in association with the processing conditions, or each reference value may be registered in association with the nozzle identification information. In the case where nozzles 36 of a plurality of types, a plurality of shapes or a plurality of opening diameters are used in one processing condition or in the case where a specific nozzle 36 is used in a plurality of processing conditions, the reference value for the circularity and the reference value for the amount of shift may be registered in association with the nozzle identification information.

A process performed by the operator or the laser processing machine 100 when the laser processing machine 100 performs actual processing of the sheet metal W will be described with reference to Figure 7. In Figure 7, in step S21, to start actual processing of a sheet metal W having predetermined material conditions, the operator places the sheet metal W as the material on the processing table 21. The sheet metal W here is a material for actual processing, and is a material having the same material conditions as the sheet metal W used for test-processing. In step S22, the operator selects, by the operation unit 40, the processing conditions determined by the test-processing, from a plurality of processing conditions stored in the processing condition database 70. At this time, the piercing reference values and the cutting reference values associated with the processing conditions are read. Furthermore, the reference value for the circularity of the nozzle 36 (the opening 36a) and the reference value for the amount of shift of the laser beam from the center of the nozzle 36 may also be read.

In step S23, the operator presses the processing start button provided on the operation unit 40. The NC device 50 moves the processing head 35 to the nozzle changer 230, and in step S24, checks the state of the nozzle 36 based on a captured image obtained by the camera 233 of the nozzle monitoring device 231 capturing the nozzle 36. In step S25, the NC device 50 determines whether the state of the nozzle 36 is good or not (whether the circularity is within a predetermined range of the reference value or not).

In the case where the state of the nozzle 36 is not good in step S25 (NO), the NC device 50 determines whether or not there is a nozzle 36 of the same type at the nozzle changer 230. In the case where there is a nozzle 36 of the same type (YES), the NC device 50 controls the nozzle changer 230 in step S27 such that the nozzle 36 is exchanged, and returns the process to step S24. In the case where there is no nozzle 36 of the same type (NO), the NC device 50 ends the process for actual processing of the sheet metal W.

In the case where the state of the nozzle 36 is good in step S25 (YES), the NC device 50 checks alignment of the nozzle 36 in step S28. In step S29, the NC device 50 determines, based on the amount of shift of the laser beam emitted from the opening 36a from the center of the opening 36a, whether a core position of the nozzle 36 is at the center or not (whether the amount of shift is within a predetermined range relative to the reference value or not). In the case where the core position is not at the center (the amount of shift is outside the predetermined range) (NO), the NC device 50 adjusts the amount of shift in step S30 by an automatic alignment device (not shown) provided at the processing head 35, and returns the process to step S28.

In the case where the core position is at the center (the amount of shift is within the predetermined range) in step S29 (YES), the NC device 50 starts processing of the sheet metal W in step S31. In step S32, the NC device 50 continues sensing of the reflected beam detection value and the scattered beam detection value. At the time of piercing of the sheet metal W, the NC device 50 performs sensing of the reflected beam detection value and the scattered beam detection value for 0.5 seconds from 0.5 seconds after the time when piercing is started. At the time of cutting the sheet metal W, the NC device 50 continues sensing of the reflected beam detection value and the scattered beam detection value until cutting is completed from 1.0 second after the time when cutting of the sheet metal W is started.

In step S33, the NC device 50 determines whether the reflected beam detection value or the scattered beam detection value at the time of piercing is within ±10% of the piercing reference value, and whether the reflected beam detection value or the scattered beam detection value at the time of cutting is within ±10% of the cutting reference value. In the case where the reflected beam detection value or the scattered beam detection value at the time of piercing is within ±10% of the piercing reference value (YES), and the reflected beam detection value or the scattered beam detection value at the time of cutting is within ±10% of the cutting reference value (YES), it means that there is no occurrence of processing defect.

That is, the NC device 50 is a determination unit for determining whether there is occurrence of a processing defect or not, based on a result of comparison between the reflected beam detection value and the reference value based on the reflected beam detection value, and is a determination unit for determining whether there is occurrence of a processing defect or not, based on a result of comparison between the scattered beam detection value and the reference value based on the scattered beam detection value.

In the case where the reflected beam detection value or the scattered beam detection value at the time of piercing is within ±10% of the piercing reference value, and the reflected beam detection value or the scattered beam detection value at the time of cutting is within ±10% of the cutting reference value, the NC device 50 continues processing of the sheet metal W in step S34. When processing of the sheet metal W is completed, the NC device 50 stops processing of the sheet metal W and ends the process in step S35.

On the other hand, in the case where the reflected beam detection value or the scattered beam detection value at the time of piercing is not within ±10% of the piercing reference value (NO), or in the case where the reflected beam detection value or the scattered beam detection value at the time of cutting is not within ±10% of the cutting reference value (NO), it means that there is occurrence of a processing defect. Accordingly, in step S35, the NC device 50 stops processing of the sheet metal W and ends the process without waiting for completion of processing of the sheet metal W.

Additionally, after the processing is completed, in the case where the sheet metal W is cut in a desirable manner, the piercing reference values and the cutting reference values based on the reflected beam detection value and the scattered beam detection value obtained during processing may be newly registered in the processing condition database 70 in association with the processing conditions to update the piercing reference values and the cutting reference values. In this case, the piercing reference values and the cutting reference values that have been registered in advance in the processing condition database 70 are rewritten and updated to the new piercing reference values and cutting reference values. In this case, the NC device 50 may display, on the display unit 90, after completion of processing, a message for selection of whether to update the piercing reference values and the cutting reference values, and when the operator selects the update, the piercing reference values and the cutting reference values may be updated.

Instead of updating the piercing reference values and the cutting reference values, a plurality of piercing reference values and cutting reference values obtained by processing of the sheet metal W several times may be stored in the processing condition database 70 in association with each of processing conditions, and optimum piercing reference values and cutting reference values may be selected by machine learning.

The threshold, ±10%, used in step S33 to determine whether the sheet metal W is cut in a desirable manner or not may be set by the operator and may be set to other than ±10%.

In the case where the reflected beam detection value or the scattered beam detection value at the time of piercing is not within ±10% of the piercing reference value, or in the case where the reflected beam detection value or the scattered beam detection value at the time of cutting is not within ±10% of the cutting reference value, the NC device 50 may display, on the display unit 90, a warning message (or a warning image) for informing the operator of occurrence of a processing defect, instead of stopping processing of the sheet metal W. Alternatively, the NC device 50 may display the warning message on the display unit 90, and then stop processing of the sheet metal W.

In addition to ±10%, ±5% may be set as the threshold, and the NC device 50 may display, on the display unit 90, an alert message (or an alert image) for informing the operator of a state where there is a possibility of occurrence of a processing defect.

In Figures 5 and 7, the NC device 50 may determine the time when piercing is started and the time when cutting of the sheet metal W is started, based on the level of the reflected beam detection value or the scattered beam detection value. With respect to the reflected beam detection value, a time point when the reflected beam detection value at a predetermined level first appears may be taken as the time of start of piercing, and with respect to the scattered beam detection value, a time point when the value is raised to a predetermined level from an extremely low level close to zero may be taken as the time of start of piercing. Furthermore, with respect to the reflected beam detection value, a time point when the reflected beam detection value drops to a predetermined level may be taken as the time when cutting of the sheet metal W is started, and with respect to the scattered beam detection value, a time point when the scattered beam detection value is increased to a higher level may be taken as the time when cutting of the sheet metal W is started.

The NC device 50 may determine the time when piercing is started and the time when cutting of the sheet metal W is started, based on timing in the execution of a processing program.

The present invention is not limited to the one or more embodiments described above, and various modifications may be made within the gist of the present invention. The laser processing machine 100 is not limited to be configured to include both the processing monitoring device 210 and the scattered beam detector 220, but may be configured to include only one of the processing monitoring device 210 and the scattered beam detector 220.

The NC device 50 uses both the piercing reference value and the cutting reference value as the reference values associated with the processing conditions for cutting the sheet metal W in a good cutting state, but it is also possible to use only one of the piercing reference value and the cutting reference value. In the case of using only one of the two, it is better to use the cutting reference value. The NC device 50 may register different reference values based on the scattered beam detection value both when the laser beam is vibrated and when the laser beam is not vibrated, even when other processing conditions are the same. The NC device 50 may register different reference values based on the scattered beam detection values according to the vibration patterns of the laser beam. With respect to the nozzle 36, it is possible to use only one of the reference value for the circularity and the reference value for the amount of shift.

The laser processing machine 100 may be configured in such a way that the galvano scanner unit 32 is not included, and that the laser beam reflected by the bend mirror 33 is focused by the focusing lens 34 to irradiate the sheet metal W with the laser beam. Instead of the galvano scanner unit 32, the laser processing machine 100 may be configured to include a mechanism for enabling a mode (a beam profile) or a shape of the laser mode to be changed.

The present application claims the benefit of priority to Japanese Patent Application No. 2019-118341, filed with the Japan Patent Office on June 26, 2019, which is hereby incorporated by reference in its entirety.

## Claims

1. A laser processing machine setting method comprising:
storing, in a storage unit, a reflected beam detection value obtained by detecting a reflected beam of a visible beam generated on a sheet metal or a scattered beam detection value obtained by detecting a scattered beam from an optical component, the reflected beam or the scattered beam being detected at a time when the sheet metal is cut by irradiating the sheet metal with a laser beam under a predetermined processing condition; and
registering the reflected beam detection value or the scattered beam detection value stored in the storage unit, as a reference value associated with the predetermined processing condition.

2. The laser processing machine setting method according to claim 1, further comprising:
storing, in the storage unit, before cutting of the sheet metal, a circularity of a nozzle configured to emit the laser beam or an amount of shift of the laser beam from a center of the nozzle; and
registering the circularity or the amount of shift stored in the storage unit, as a reference value associated with the predetermined processing condition or with nozzle identification information for identifying the nozzle.

3. The laser processing machine setting method according to claim 1 or 2, further comprising registering the reference value when a registration button is pressed before cutting of the sheet metal or after cutting of the sheet metal.

4. The laser processing machine setting method according to claim 3, further comprising registering the reference value based on pressing of the registration button after cutting of the sheet metal, in a case where the sheet metal is cut in a desirable cutting state.

5. The laser processing machine setting method according to any one of claims 1 to 4, further comprising registering the reference value in relation to each processing condition of a plurality of processing conditions.

6. The laser processing machine setting method according to any one of claims 1 to 5, further comprising, when the reflected beam detection value or the scattered beam detection value is newly stored in the storage unit, registering the newly stored reflected beam detection value or the newly stored scattered beam detection value, as the reference value.

7. A laser processing machine comprising:
a registration unit configured to register, as a reference value, a reflected beam detection value obtained by detecting a reflected beam of a visible beam generated on a sheet metal or a scattered beam detection value obtained by detecting a scattered beam from an optical component, the reflected beam or the scattered beam being detected at a time when the sheet metal is cut by irradiating the sheet metal with a laser beam under a predetermined processing condition; and
a determination unit configured to determine whether there is occurrence of a processing defect or not based on a result of comparison between the reference value and the reflected beam detection value or the scattered beam detection value that is obtained at a time when the sheet metal is cut under the predetermined material conditions.
